# EUROPÄISCHE PATENTANMELDUNG

(11) **EP 1 273 993 A2**
(43) Veröffentlichungstag der Anmeldung: **08.01.2003**
(21) Anmeldenummer: 02012227.1
(22) Anmeldetag: 04.06.2002
(51) Int. Cl.: G06F 1/00

(54) **Verfahren zum Schutz eines Mikrorechner-Systems gegen Manipulation seines Programms**

(30) Priorität: 02.07.2001 DE 10131577
(71) Anmelder: ROBERT BOSCH GMBH, 70442 Stuttgart (DE)
(72) Erfinder: Hurich, Martin, 93346 Ihrlerstein (DE)

(57) **Zusammenfassung**

Die Erfindung betrifft ein Verfahren zum Schutz eines Mikrorechner-Systems (1) gegen Manipulation seines Programms. Das Mikrorechner-System (1) weist einen wiederbeschreibbaren Speicher (5) auf, in dem mindestens ein Teil des Programms gespeichert wird. Bei dem Verfahren wird im Rahmen eines Überprüfungsverfahrens überprüft, ob zumindest ein Teil (5a) des wiederbeschreibbaren Speichers (5) einen vorgegebenen Inhalt.aufweist. Um ein möglichst schnelles Erkennen eines manipulierten Programms zu ermöglichen, wird vorgeschlagen, dass das Überprüfungsverfahren während des Betriebs des Mikrorechner-Systems (1) in vorgebbaren zeitlichen Abständen zyklisch ausgeführt wird. Es wird des weiteren vorgeschlagen, dass im Rahmen des Überprüfungsverfahrens eine Ausführung des Programms sofort blockiert wird, falls der wiederbeschreibbare Speicher (5) oder ein Teil (5a) davon nicht den vorgegebenen Inhalt aufweist.

## Beschreibung

Die vorliegende Erfindung betrifft ein Verfahren zum Schutz eines Mikrorechner-Systems gegen Manipulation seines Programms. Das Mikrorechner-System weist einen wiederbeschreibbaren Speicher auf, in dem mindestens ein Teil des Programms gespeichert wird. Bei dem Verfahren wird im Rahmen eines Überprüfungsverfahrens überprüft, ob zumindest ein Teil des wiederbeschreibbaren Speichers einen vorgegebenen Inhalt aufweist.

Die Erfindung betrifft außerdem ein Mikrorechner-System, das gegen Manipulation seines Programms geschützt ist. Das Mikrorechner-System weist einen wiederbeschreibbaren Speicher auf, in dem mindestens ein Teil des Programms gespeichert ist. Außerdem umfaßt das Mikrorechner-System zu seinem Schutz Prüfmittel zum Überprüfen, ob zumindest ein Teil des wiederbeschreibbaren Speichers einen vorgegebenen Inhalt aufweist.

### Stand der Technik

Ein Verfahren und ein Mikrorechner-System der eingangs genannten Art ist beispielsweise aus der DE 197 23 332 A1 bekannt. Das dort beschriebene Verfahren dient insbesondere zum Schutz eines Kraftfahrzeugsteuergeräts gegen Manipulation seines Steuerprogramms. Das Steuergerät dient zur Steuerung und/oder Regelung von Kraftfahrzeugfunktionen, beispielsweise einer Brennkraftmaschine, einer elektronischen Steuerung (steerby-wire oder einer elektronischen Bremse (break-by-wire). Bei dem bekannten Verfahren wird bei jedem Start des Mikrorechner-Systems eine Bootroutine und als Teil der Bootroutine ein Überprüfungsverfahren ausgeführt. Das Überprüfungsverfahren ist beispielsweise als ein Überprüfungsprogramm realisiert, das in einem nur-Lese-Speicher des Mikrorechner-Systems abgelegt ist. Im Rahmen der Ausführung des Überprüfungsverfahrens wird aus zumindest einem Teil des Speicherinhalts des wiederbeschreibbaren Speichers mit Hilfe eines Verschlüsselungsalgorithmus ein Codewort ermittelt und mit einem in dem wiederbeschreibbaren Speicher abgelegten Vergleichscodewort verglichen. Das Codewort ist beispielsweise eine Checksumme. Die Ausführung des in dem wiederbeschreibbaren Speicher des Steuergeräts abgelegten Steuerprogramms wird blockiert, falls das ermittelte Codewort nicht gleich dem Vergleichscodewort ist.

Falls in dem wiederbeschreibbaren Speicher ein manipuliertes Programm abgelegt wurde, weicht das über den Speicherinhalt des wiederbeschreibbaren Speichers ermittelte Codewort in aller Regel von dem abgelegten Vergleichscodewort ab, und die Ausführung des manipulierten Programms wird blockiert. Dadurch wird verhindert, dass die von dem Steuergerät zu steuernden oder zu regelnden Kraftfahrzeugfunktionen oder Kraftfahrzeugeinheiten aufgrund einer Manipulation des Steuerprogramms beschädigt werden.

Es können verschiedene Verschlüsselungsalgorithmen zur Bildung des Codeworts eingesetzt werden. Insbesondere können Quersummen und/oder Längssummen gebildet werden (even parity check) oder es kann ein Cyclic Redundancy Check (CRC) eingesetzt werden, bei welchem aus dem Inhalt des wiederbeschreibbaren Speichers blockweise Codeworte erzeugt und mit Vergleichscodeworten verglichen werden. Je komplizierter die Verschlüsselungsalgorithmen sind, die zur Berechnung des Codewortes verwendet werden, desto schwieriger ist es für unbefugte Dritte, den Manipulationsund Tuningschutz zu überwinden. Andererseits bedeutet ein komplizierter Verschlüssungsalgorithmus einen großen Bedarf an Rechenkapazität (Speicher und Rechenzeit) eines Rechenkerns, insbesondere eines Mikroprozessors, des Mikrorechner-Systems. Problematisch ist jedoch, dass in einem Mikrorechner-System nicht beliebig viel Zeit für die Überprüfung des Inhalts des wiederbeschreibbaren Speichers zur Verfügung steht. Hier besteht also ein Zielkonflikt zwischen einem möglichst sicheren und zuverlässigen Manipulations- bzw. Tuningschutz eines Mikrorechner-Systems und einer möglichst schnellen Durchführung des Überprüfungsverfahrens ohne eine merkliche Verzögerung der Ausführung des Programms.

In einem Mikrorechner-System können aus Kostengründen und konstruktionsbedingt (leistungsstarke Mikorprozessoren sind relativ groß bauend, verbrauchen relativ viel Energie und erzeugen viel Abwärme, die aus dem Mikrorechner-System abgeleitet werden muss) nicht beliebig leistungsstarke Mikroprozessoren eingesetzt werden. Aus diesem Grund wird im Stand der Technik das Überprüfungsverfahren lediglich zu bestimmten Zeitpunkten ausgeführt, zu denen mehr Zeit für die vollständige Abarbeitung des Überprüfungsprogramms. zur Verfügung steht, beispielsweise beim Starten des Mikrorechner-Systems oder im Anschluss an eine Neu- oder Umprogrammierung des wiederbeschreibbaren Speichers. Alternativ kann auch nur ein Teil des Überprüfungsprogramms abgearbeitet werden, was weniger Zeit in Anspruch nimmt, jedoch die Sicherheit und Zuverlässigkeit des Manipulations- und Tuningschutzes reduziert.

Ergibt das Überprüfungsverfahren, dass der überprüfte Teil des wiederbeschreibbaren Speichers einen vorgegebenen Inhalt aufweist, wird in einem Speicher des Mikrorechner-Systems eine entsprechende Kennung abgelegt. Durch Abfragen dieser Kennung kann zu späteren Zeitpunkten, beispielsweise bei jedem Starten des Mikrorechner-Systems, innerhalb kürzester Zeit überprüft werden, ob das in dem wiederbeschreibbaren Speicher abgelegte Programm manipuliert ist oder nicht. Eine Überprüfung des Inhalts weiterer Teile des wiederbeschreibbaren Speichers oder gar des gesamten wiederbeschreibbaren Speichers während des Betriebs des Mikrorechner-Systems bzw. während der Laufzeit des Programms erfolgt bei dem aus dem Stand der Technik bekannten Verfahren jedoch nicht. Eine weitere Überprüfung erfolgt erst, wenn der Zeitpunkt für eine nochmalige Durchführung des Überprüfungsverfahrens erreicht ist, beispielsweise bei einem erneuten Starten des Mikrorechner-Systems. Bei dem erfindungsgemäßen Verfahren kann es deshalb relativ lange dauern, bis eine Manipulation des Programms eines Mikrorechner-Systems erkannt wird und geeignete Gegenmaßnahmen getroffen werden.

Der vorliegenden Erfindung liegt deshalb die Aufgabe zugrunde, ein Mikrorechner-System sicher und zuverlässig gegen Manipulation seines Programms zu schützen, wobei eine Manipulation innerhalb einer möglichst kurzen Zeit erkannt werden soll.

Zur Lösung dieser Aufgabe schlägt die Erfindung ausgehend von dem Verfahren der eingangs genannten Art vor, dass das Überprüfungsverfahren während des Betriebs des Mikrorechner-Systems in vorgebbaren zeitlichen Abständen zyklisch ausgeführt wird.

### Vorteile der Erfindung

Gemäß der vorliegenden Erfindung wird das Überprüfungsverfahren also nicht nur zu diskreten Zeitpunkten, beispielsweise im Anschluss an eine Neu- bzw. Umprogrammierung des wiederbeschreibbaren Speichers, sondern zyklisch während des normalen Betriebs des Mikrorechner-Systems, d. h. während der Abarbeitung des Programms, ausgeführt. Die zyklische Ausführung des Überprüfungsverfahrens kann zusätzlich zu oder anstratt einer Ausführung des Überprüfungsverfahrens zu diskreten Zeitpunkten, beispielsweise nach einer Neu- oder Umprogrammierung des wiederbeschreibbaren Speichers, ausgeführt werden. Der während eines Zyklus ausgeführte Teil des Überprüfungsverfahrens ist derart reduziert, dass die Abarbeitung des Programms durch einen Rechnerkern, insbesondere durch einen Mikroprozessor, des Mikrorechner-Systems kaum beeinträchtigt wird. Die Reduktion des Überprüfungsverfahrens kann beispielsweise durch eine Überprüfung lediglich eines kleinen Teils des wiederbeschreibbaren Speichers bei jedem Zyklus erfolgen. Im Unterschied zu dem bekannten Verfahren kann bei der Erfindung jedoch bereits nach relativ kurzem Betrieb des Mikrorechner-Systems und mehrmaligem Ausführen von verschiedenen Teilen des Überprüfungsprogramms der gesamte wiederbeschreibbare Speicher überprüft werden. Falls im Rahmen der Ausführung des Überprüfungsverfahrens erkannt wird, dass der wiederbeschreibbare Speicher bzw. der überprüfte Teil des wiederbeschreibaren Speichers nicht einen vorgegebenen Inhalt aufweist, werden sofort geeignete Maßnahmen eingeleitet. Beispielsweise wird das Programm oder der überprüfte Teil des Programms sofort für ungültig erklärt und eine Ausführung des Programms bzw. des überprüften Teils des Programms sofort blockiert.

Aus dem Stand der Technik sind verschiedene Überprüfungsverfahren bekannt, die im Zusammenhang mit der vorliegenden Erfindung eingesetzt werden können. Als erstes kann beispielsweise ein aus der DE 197 22 332 A1 bekanntes Verfahren eingesetzt werden, bei dem über den wiederbeschreibbaren Speicher oder zumindest einen Teil des wiederbeschreibbaren Speichers ein Codewort, vorzugsweise eine Checksumme, gebildet wird und mit einem Vergleichscodewort verglichen wird. Des weiteren wäre es denkbar, dass der Inhalt des wiederbeschreibbaren Speichers im Rahmen des Überprüfungsverfahrens anhand eines a symmetrischen Verschlüssungsverfahrens signiert oder verschlüsselt wird. Durch Überprüfen der Signatur oder durch Entschlüsseln eines neu- oder umprogrammierten Programms kann festgestellt werden, ob das neue Programm manipuliert ist oder nicht. Als ein weiteres Verfahren können schließlich an definierten Stellen in dem Programm Kennungen eingebracht werden, die nach zuvor festgelegten Verfahren überprüft werden. Der Vorteil dieses Verfahrens liegt in der geringen Anforderung an die Rechenkapazität des Mikrorechner-Systems. Nachteilig ist jedoch, dass der Inhalt eines zu prüfenden Programms nicht in die Überprüfung eingeht, und somit nur ein vollständig anderes Programm ohne Kennungen als manipuliert erkannt werden kann.

Gemäß einer vorteilhaften Weiterbildung der vorliegenden Erfindung wird vorgeschlagen, dass im Rahmen des Überprüfungsverfahrens eine Ausführung des Programms sofort blockiert wird, falls der wiederbeschreibbare Speicher oder ein Teil davon nicht den vorgegebenen Inhalt aufweist. Dadurch, dass im Anschluss an das zyklisch ausgeführte Überprüfungsverfahren die Ausführung des Programms sofort blockiert wird, falls es als manipuliert erkannt wird, ist ein schnelles und sicheres Blockieren der Ausführung des Programms möglich, wodurch eine Beschädigung einer von dem Mikrorechner-Sysem gesteuerten oder geregelten Einheit frühzeitig verhindert wird.

Gemäß einer bevorzugten Ausführungsform der vorliegenden Erfindung wird vorgeschlagen, dass durch das Überprüfungsverfahren im Rahmen mehrerer Zyklen verschiedene Teile des wiederbeschreibbaren Speichers überprüft werden. Welche Teile des wiederbeschreibbaren Speichers während eines Zyklus des Überprüfungsverfahrens überprüft werden, kann entweder anhand eines vordefinierten Algorithmus oder zufällig ausgewählt werden. Bei einem festgelegten Algorithmus kann genau vorhergesagt werden, wann der gesamte wiederbeschreibbare Speicher überprüft worden ist. Bei einer zufälligen Wahl der zu prüfenden Teile des wiederbeschreibbaren Speichers kann statistisch ermittelt werden, wann der gesamte wiederbeschreibbare Speicher überprüft worden ist. Die Größe der im Rahmen eines Zyklus zu überprüfenden Teile des wiederbeschreibbaren Speichers ist abhängig von der Rechenleistung des Rechnerkerns des Mikroprozessor-Systems und der zur Verfügung stehenden Rechenzeit. Die Größe der Teile sollte so gewählt werden, dass eine Beeinträchtigung der Ausführung des Programms aufgrund der Ausführung des Überprüfungsverfahrens vermieden wird.

Gemäß einer anderen vorteilhaften Weiterbildung der vorliegenden Erfindung wird vorgeschlagen, dass eine vorgebbare Kennung in einem Speicherbereich des Mikrorechner-Systems gespeichert wird, falls der wiederbeschreibbare Speicher oder ein Teil davon den vorgegebenen Inhalt aufweist, dass der Inhalt des Speicherbereichs während der Ausführung des Programms überprüft wird und dass zum Blockieren der Ausführung des Programms die Kennung gelöscht wird. Das Vorhandensein der Kennung in dem Speicherbereich des Mikrorechner-Systems bedeutet also, dass das in dem wiederbeschreibbaren Speicher abgelegte Programm nicht manipuliert ist. Falls eine Manipulation des Programms erkannt wird, wird die Kennung gelöscht. Die Kennung ist beispielsweise als ein Prüfmuster ausgebildet. Sie kann ein Bit, mehrere Bit oder gar ein oder mehrere Byte umfassen.

Gemäß einer alternativen Ausführungsform der vorliegenden Erfindung wird vorgeschlagen, dass ein Speicherbereich des Mikrorechner-Systems während der Ausführung des Programms überprüft wird und dass zum Blockieren der Ausführung des Programms eine vorgebbare Kennung in dem Speicherbereich gespeichert wird. Gemäß dieser alternativen Ausführungsform erhält der Speicherbereich des Mikrorechner-Systems also bei nicht manipuliertem Programm keine Kennung. Falls jedoch eine Manipulation des Programms erkannt wird, wird eine entsprechende Kennung in dem Speicherbereich abgelegt. Gemäß einer weiteren bevorzugten Ausführungsform der vorliegenden Erfindung wird vorgeschlagen, dass die zyklische Ausführung des Überprüfungsverfahrens während des Betriebs des Mikrorechner-Systems als eine Hintergrundanwendung abläuft. Das Überprüfungsverfahren ist also im Hintergrund zu der Abarbeitung des Programms durch den Rechnerkern stets aktiv und wird zu vorgebbaren Zeitpunkten zyklisch aufgerufen.

Gemäß einer alternativen Ausführungsform der vorliegenden Erfindung wird vorgeschlagen, dass die zyklische Ausführung des Überprüfungsverfahrens während des Betriebs des Mikrorechner-Systems zu laufzeitunkritischen Zeitpunkten abläuft. Als laufzeitunkritische Zeitpunkte werden solche Zeitpunkte bezeichnet, zu denen die Laufzeit keine Rolle spielt, d. h. der Rechnerkern lediglich eine geringe Auslastung durch die Abarbeitung des Programms aufweist. Dies ist beispielsweise während eines stationären Betriebs des Mikrorechner-Systems der Fall.

Gemäß der vorliegenden Erfindung wird außerdem eine besonders vorteilhafte Verwendung des erfindungsgemäßen Verfahrens zum Schutz eines Kraftfahrzeugsteuergeräts gegen Manipulation seines Steuerprogramms vorgeschlagen, wobei das Steuergerät zur Steuerung und/oder Regelung einer Kraftfahrzeugfunktion dient.

Als eine weitere Lösung der Aufgabe der vorliegenden Erfindung wird ausgehend von dem Mikrorechner-System der eingangs genannten Art vorgeschlagen, dass die Prüfmittel die Überprüfung des wiederbeschreibbaren Speichers während des Betriebs des Mikrorechner-Systems in vorgebbaren zeitlichen Abständen zyklisch ausführen.

Gemäß einer vorteilhaften Weiterbildung der vorliegenden Erfindung wird vorgeschlagen, dass der wiederbeschreibbare Speicher als ein EPROM (Erasable Programmable Read Only Memory) oder als ein EEPROM (Electronically Erasable Programmable Read Only Memory), insbesondere als ein Flash-Speicher ausgebildet ist.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Fig. 1: ein erfindungsgemäßes Mikrorechner-System gemäß einer bevorzugten Ausführungsform; und
- Fig. 2: ein Ablaufdiagramm eines erfindungsgemäßen Verfahrens gemäß einer bevorzugten
Ausführungsform.

### Beschreibung der Ausführungseispiele

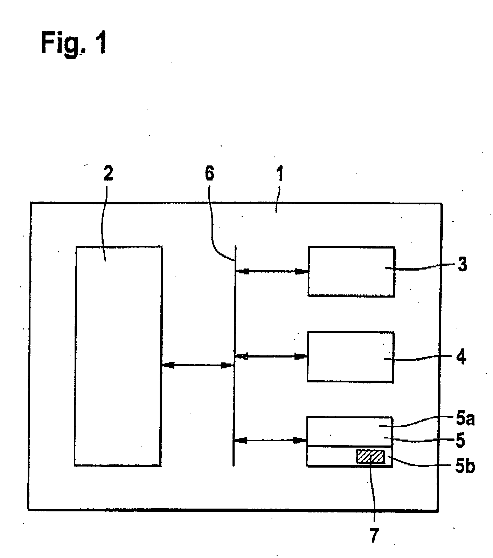

In Fig. 1 wird ein Mikrorechner-System 1 gezeigt, das einen Rechnerkern 2 (Central Processing Unit, CPU) und mehrere Speicher 3, 4, 5 aufweist. Die Speicher 3, 4, 5 stehen untereinander und mit dem Rechnerkern 2 über eine Datenverbindung 6, die in dem vorliegenden Ausführungsbeispiel als ein Bus-System ausgebildet ist, in Verbindung.

Bei dem Speicher 3 handelt es sich um einen nur-Lese-Speicher (Read Only Memory, ROM), bei dem Speicher 4 um einen Schreib-/Lese-Speicher (Random Access Memory, RAM) und bei dem Speicher 5 um einen wiederbeschreibbaren Speicher (Erasable Programmable Read Only Memory, EPROM, Electronically Erasable Programmable Read Only Memory, EEPROM oder Flash-EPROM). In den Speichern 3, 4, 5 sind Programmbefehle oder Daten gespeichert, die durch den Rechnerkern 2 verarbeitet werden. Dabei sind je nach Art des Speichers 3, 4, 5 unterschiedliche Daten oder Programme abgelegt.

Der nur-Lese-Speicher 3 enthält ein fest gespeichertes Programm, welches nur durch Herstellung eines neuen Speicherbausteins geändert werden kann. In diesem Speicher 3 wird daher in der Regel ein Minimalprogramm abgelegt, welches den Rechnerkern 2 in die Lage versetzt, Befehle zu verarbeiten, die in anderen Speichermedien, insbesondere in dem wiederbeschreibbaren Speicher 5, gespeichert sind. Der Schreib-/Lese-Speicher 4 ist nur während des laufenden Betriebs des Mikrorechner-Systems 1 in der Lage, Daten zu speichern, und dient daher nur als Ablage von Daten oder von Programmbefehlen während des laufenden Betriebs des Mikrorechner-Systems 1. Auf die Speicherinhalte des Schreib-/Lese-Speichers 4 kann besonders schnell zugegriffen werden, so dass teilweise auch Programme von anderen Speichermedien, beispielsweise aus dem nur-Lese-Speicher 3 oder dem wiederbeschreibbaren Speicher 5, in den Schreib-/Lese-Speicher 4 übertragen werden, um von dort aus ausgeführt zu werden. Der wiederbeschreibbare Speicher 5, der in dem vorliegenden Ausführungsbeispiel als EPROM oder als Flash-EPROM ausgeführt ist, enthält Programmabschnitte oder Daten, die in einem gewissen Rahmen veränderbar sein sollen. Dadurch wird es möglich, das Mikrorechner-System 1 an unterschiedliche Aufgaben anzupassen. Dies ist inbesondere vorteilhaft, wenn das Mikrorechner-System 1 als Steuergerät für ein Kraftfahrzeug angewendet wird. In dem nur-Lese-Speicher 3 werden dann neben dem Minimalprogramm auch das Steuerprogramm für die Brennkraftmaschine oder andere Kraftfahrzeugfunktionen abgelegt. In dem wiederbeschreibbaren Speicher 5 werden dann Daten, beispielsweise Parameter oder Grenzwerte für den Betrieb der Brennkraftmaschine abgelegt, auf die das Steuerprogramm zugreift.

Weiterhin können zusätzliche Programm-Module in dem wiederbeschreibbaren Speicher 5 abgelegt werden, die z.B. nicht bei jedem Steuergerät verwirklicht werden sollen. Es ist so möglich, ein Steuergerät für unterschiedliche Anwendungen zu verwenden. Die Steuer- bzw. Regelungsfunktionen, die für alle Anwendungen gleich sind, werden in dem nur-Lese-Speicher 3 abgelegt, während die Programme oder Daten, die sich bei den einzelnen Anwendungen unterscheiden, in dem wiederbeschreibbaren Speicher 5 abgelegt werden.

Problematisch ist dabei jedoch, dass diese erhöhte Flexibilität mit dem Risiko verbunden ist, dass Unbefugte den Speicherinhalt des wiederbeschreibbaren Speichers 5 verändern. In der Anwendung bei Kraftfahrzeugen könnte auf diese Weise beispielsweise die Leistung der Brennkraftmaschine durch einen Austausch von Programmen oder Daten in dem wiederbeschreibbaren Speicher 5 erhöht werden. Diese Leistungssteigerung durch Manipulation des Steuerprogramms oder der Daten kann jedoch zu einer Überlastung der Brennkraftmaschine und schließlich sogar zu einem Defekt der Brennkraftmaschine führen. Um eine derartige unerwünschte Manipulation am Speicherinhalt des wiederbeschreibbaren Speichers 5 zu verhindern, wird in dem nur-Lese-Speicher 3 ein Überprüfüngsprogramm zur Durchführung eines Überprüfungsverfahrens vorgesehen, das in der Lage ist, den Inhalt des Speichers 5 auf derartige unzulässige Änderungen zu untersuchen.

Aus dem Stand der Technik sind verschiedene Überprüfungsverfahren bekannt, die im Rahmen der vorliegenden Erfindung eingesetzt werden können. Insbesondere kann ein Überprüfungsverfahren eingesetzt werden, das das Vorhandensein von Kennungen in dem Programm überprüft, wobei die Kennungen zuvor an definierten Stellen in das Programm eingebracht wurden. Im Rahmen des Überprüfungsverfahrens kann jedoch auch über den Inhalt des wiederbeschreibbaren Speichers 5 oder einen Teil davon ein Codewort, beispielsweise eine Checksumme, gebildet werden, und mit einem Vergleichscodewort verglichen werden.
Die Codewortberechnung kann je nach Ausführung das gesamte in dem wiederbeschreibbaren Speicher 5 abgelegte Programm oder nur Teile des Programms einbeziehen. Die Rechenzeit zur Berechnung eines Codewortes ist proportional zu der Größe des zu prüfenden Speicherbereichs. Je nach zur Verfügung stehender Rechenzeit kann die Größe des zu überprüfenden Speicherbereichs deshalb so gewählt werden, dass keine zu große Belastung der Ausführung des Programms auftritt. Schließlich kann auch ein Überprüfungsverfahren eingesetzt werden, welches eine Signatur über das Programm berechnet, wobei als zusätzliche Information ein mikrorechnerindividueller oder anwendungsspezifischer Wert hinzugezogen werden kann. Die Signatur kann beispielsweise anhand eines asymmetrischen Verschlüsselungsverfahrens mit einem für jedermann zugänglichen öffentlichen Schlüssel und einem nur einem beschränkten Personkreis zugänglichen privaten Schlüssel ausgeführt werden.

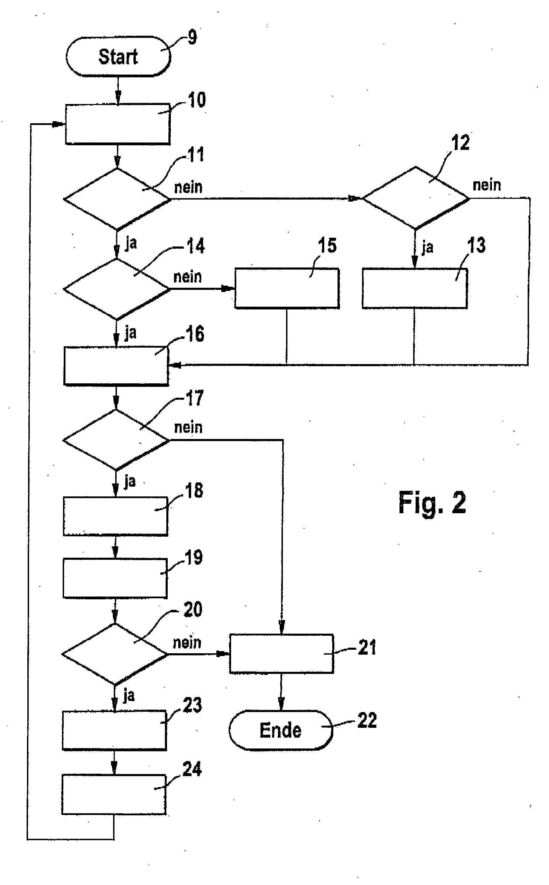

In Fig. 2 ist ein Ablaufprogramm eines erfindungsgemäßen Verfahrens dargestellt. Das Verfahren beginnt in einem Funktionsblock 9. In einem Funktionsblock 10 wird das Überprüfungsverfahren zur Prüfung des Inhalts eines Teils 5a des wiederbeschreibbaren Speichers 5 auf manipulierte Daten ausgeführt. In einem Abfrageblock 11 wird anschließend überprüft, ob die Überprüfung des wiederbeschreibbaren Speichers 5 bzw. des Teils 5a davon erfolgreich war. Falls nein, bedeutet dies, dass eine Manipulation des in dem wiederbeschreibbaren Speichers 5 abgelegten Programms erkannt worden ist. In einem. Abfrageblock 12 wird dann überprüft, ob an einem vorgebbaren Speicherbereich 5b des wiederbeschreibbaren Speichers 5 bereits eine Kennung 7, beispielsweise ein Prüfmuster, abgelegt ist. Falls dem so ist, wird in einem Funktionsblock 13 die Kennung 7 gelöscht, d. h. das Prüfmuster zerstört. Falls das in dem Abfrageblock 11 ausgeführte Überprüfungsverfahren erfolgreich war, wird von dem Abfrageblock 11 zu einem Abfrageblock 14 verzweigt, in dem überprüft wird, ob in dem vorgebbaren Speicherbereich 5b des wiederbeschreibbaren Speichers 5 bereits eine Kennung 7 abgelegt ist. Falls nein, wird in einem Funktionsblock 15 eine entsprechende Kennung 7 abgelegt, um die Gültigkeit des Programms zu dokumentieren. In einem Funktionsblock 16 ist das Überprüfungsverfahren abgeschlossen.

Anschließend wird in einem Abfrageblock 17 überprüft, ob das in dem wiederbeschreibbaren Speicher 5 abgelegte Programm ausgeführt werden soll. Falls ja, wird das Programm in einem Funktionsblock 18 initialisiert, d. h. es werden notwendige Maßnahmen ausgeführt, um den Rechnerkern 2 zur Bearbeitung des Programms vorzubereiten. Dabei werden interne Register des Rechnerkerns 2 auf Ausgangswerte gesetzt, und der Rechnerkern 2 wird so in die Lage versetzt, Ein- und Ausgabeoperationen, die zur Bearbeitung von Befehlen notwendig sind, vorzunehmen. Nach der Ausführung dieser sogenannten Bootroutine in dem Funktionsblock 18 wird in einem Funktionsblock 19 der Inhalt des vorgebbaren Speicherbereichs 5b des wiederbeschreibbaren Speichers 5 abgefragt. Anschließend wird in einem Abfrageblock 20 überprüft, ob die Kennung 7 in dem vorgebbaren Speicherbereich 5b abgelegt ist oder nicht. Falls keine Kennung 7 abgelegt ist, bedeutet dies, dass das Programm als manipuliert erkannt worden ist. Infolgedessen wird zu einem Funktionsblock 21 verzweigt und die (weitere) Ausführung des Programms blockiert. Alternativ können auch andere Maßnahmen als Reaktion auf die Detektion der manipulierten Daten getroffen werden, beispielsweise ein Notlaufbetrieb des Mikrorechner-Systems mit vorgegebenen Parametern und Grenzwerten. In einem Funktionsblock 22 ist das erfindungsgemäße Verfahren beendet.

Falls jedoch die Abfrage in Abfrageblock 20 ergibt, dass die Kennung 7 in dem vorgebbaren Speicherbereich 5b abgelegt ist, wird zu einem Funktionsblock 23 verzweigt, wo das Programm (weiter) ausgeführt wird. Das Programm wird solange ausgeführt, wie keine Anforderung zur erneuten Ausführung des Überprüfungsverfahrens anliegt. Diese Anforderung kann entweder zu genau vorgegebenen Zeitpunkten oder aber zu zufällig gewählten Zeitpunkten während der Ausführung des Programms erfolgen. Falls eine solche Anforderung erfolgt (Funktionsblock 24), wird wieder zu dem Funktionsblock 10 verzweigt und das Überprüfungsverfahren erneut ausgeführt. In dem erneuten Zyklus wird vorzugsweise ein anderer Teil des Speichers 5 überprüft als in dem ersten Zyklus, so dass nach mehreren Zyklen der gesamte Speicher 5 überprüft ist.

Das Mikrorechner-System 1 ist vorzugsweise als ein Steuergerät für ein Kraftfahrzeug zur Steuerung und/oder Regelung von Kraftfahrzeugfunktionen, beispielsweise einer Brennkraftmaschine, einer elektronischen Lenkung oder einer elektronischen Bremse, ausgebildet. Durch das erfindungsgemäße Verfahren kann eine Manipulation eines Steuerprogramms oder von Parameters oder Grenzwerten des Steuergeräts innerhalb kürzester Zeit erkannt werden. Außerdem kann durch das erfindungsgemäße Verfahren ein manipuliertes Steuerprogramm innerhalb kürzester Zeit blockiert werden, so dass eine weitere Ausführung des Steuerprogramms nicht mehr möglich ist. Nach einem Blockieren des Steuerprogramms kann das Steuergerät entweder abgeschaltet oder in einen Notlaufbetrieb umgeschaltet werden, so dass notdürftige Aufrechterhaltung der zu steuernden bzw. zu regelnden Kraftfahrzeugfunktionen auch bei blockiertem Steuerprogramm möglich ist.

## Patentansprüche

1. Verfahren zum Schutz eines Mikrorechner-Systems (1) gegen Manipulation seines Programms, wobei das Mikrorechner-System (1) einen wiederbeschreibbaren Speicher (5) aufweist, in dem mindestens ein Teil des Programms gespeichert wird, bei dem im Rahmen eines Überprüfungsverfahrens überprüft wird, ob zumindest ein Teil (5a) des wiederbeschreibbaren Speichers (5) einen vorgegebenen Inhalt aufweist, **dadurch gekennzeichnet, dass** das Überprüfungsverfahren während des Betriebs des Mikrorechner-Systems (1) in vorgebbaren zeitlichen Abständen zyklisch ausgeführt wird.

2. Verfahren nach Anspruch 1, **dadurch gekennzeichnet, dass** im Rahmen des Überprüfungsverfahrens eine Ausführung des Programms sofort blockiert wird, falls der wiederbeschreibbare Speicher (5) oder ein Teil (5a) davon nicht den vorgegebenen Inhalt aufweist.

3. Verfahren nach Anspruch 1 oder 2, **dadurch gekennzeichnet, dass** durch das Überprüfungsverfahren im Rahmen mehrerer Zyklen verschiedene Teile (5a) des wiederbeschreibbaren Speichers (5) überprüft werden.

4. Verfahren nach einem der Ansprüche 1 bis 3, **dadurch gekennzeichnet, dass** eine vorgebbare Kennung (7) in einem Speicherbereich (5b) des Mikrorechner-Systems (1) gespeichert wird, falls der wiederbeschreibbare Speicher (5) oder ein Teil (5a) davon den vorgegebenen Inhalt aufweist, dass der Inhalt des Speicherbereichs (5b) während der Ausführung des Programms überprüft wird und dass zum Blockieren der Ausführung des Programms die Kennung (7) gelöscht wird.

5. Verfahren nach einem der Ansprüche 1 bis 3, **dadurch gekennzeichnet, dass** ein Speicherbereich des Mikrorechner-Systems (1) während der Ausführung des Programms überprüft wird und dass zum Blockieren der Ausführung des Programms eine vorgebbare Kennung (7) in dem Speicherbereich (5b) gespeichert wird.

6. Verfahren nach einem der Ansprüche 1 bis 5, **dadurch gekennzeichnet, dass** die zyklische Ausführung des Überprüfungsverfahren während des Betriebs des Mikrorechner-Systems (1) als eine Hintergrundanwendung abläuft.

7. Verfahren nach einem der Ansprüche 1 bis 5, **dadurch gekennzeichnet, dass** die zyklische Ausführung des Überprüfungsverfahren während des Betriebs des Mikrorechner-Systems (1) zu laufzeitunkritischen Zeitpunkten abläuft.

8. Verwendung eines Verfahrens nach einem der Ansprüche 1 bis 7, **dadurch gekennzeichnet, dass** das Verfahren zum Schutz eines Kraftfahrzeugsteuergeräts gegen Manipulation seines Steuerprogramms verwendet wird, wobei das Steuergerät zur Steuerung und/oder Regelung einer Kraftfahrzeugfunktion dient.

9. Gegen Manipulation seines Programms geschütztes Mikrorechner-System (1) mit einem wiederbeschreibbaren Speicher (5), in dem mindestens ein Teil des Programms gespeichert ist, wobei das Mikrorechner-System (1) Prüfmittel zum Überprüfen, ob zumindest ein Teil (5a) des wiederbeschreibbaren Speichers (5) einen vorgegebenen Inhalt aufweist, zum Schutz des Mikrorechner-Systems (1) umfasst, **dadurch gekennzeichnet, dass** die Prüfmittel die Überprüfung des wiederbeschreibbaren Speichers (5) während des Betriebs des Mikrorechner-Systems (1) in vorgebbaren zeitlichen Abständen zyklisch ausführen.

10. Mikrorechner-System (1) nach Anspruch 9, **dadurch gekennzeichnet, dass** der wiederbeschreibbare Speicher (5) als ein Flash-Speicher ausgebildet ist.
